## Europäisches Patentamt

(19) **European Patent Office**

**Office européen des brevets**

(11) Publication number: **0 031 193**
**B1**

(12) **EUROPEAN PATENT SPECIFICATION**

(45) Date of publication of patent specification: **13.06.84**

(51) Int. Cl.³: **H 04 L 27/18, H 03 C 3/00**

(21) Application number: **80302927.1**

(22) Date of filing: **22.08.80**

(54) **Double sideband quadrature carrier modulation system and method of transmitting information using the point constellation of such a system.**

(30) Priority: **31.08.79 US 71734**

(43) Date of publication of application:
**01.07.81 Bulletin 81/26**

(45) Publication of the grant of the patent:
**13.06.84 Bulletin 84/24**

(84) Designated Contracting States:
**AT BE CH DE FR GB IT LI LU NL SE**

(56) References cited:
**GB - A - 1 356 179**
**GB - A - 1 516 040**
**GB - A - 1 530 417**
**US - A - 3 887 768**
**US - A - 3 988 539**

(73) Proprietor: **Paradyne Corporation**
**8550 Ulmerton Road**
**Largo Florida 33541 (US)**

(72) Inventor: **Armstrong, Thomas R.**
**6996 122nd Drive North**
**Largo, Florida 33540 (US)**

(74) Representative: **Abbott, David John et al,**
**Abel & Imray Northumberland House 303-306**
**High Holborn**
**London, WC1V 7LH (GB)**

Courier Press, Leamington Spa, England.

## Description

### Background of the invention

The present invention relates to high-speed data transmission and in particular to signal structures for double side band quadrature carrier (DSB—QC) modulation.

In U.S. Patent 3,887,768 issued June 3, 1975 to Forney, Jr., et al for Signal Structures for Double Side Band Quadrature Carrier Modulation the inherent advantages of DSB—QC over single-sideband (SSB) and vestigial-sideband (VSB) are discussed in detail. Briefly, DSB—QC system can be designed to have a much greater insensitivity to phase jitter on the line, or to phase error in the recovered carrier than SSB or VSB signals while permitting a coherent local demodulation carrier to be derived from the received data without requiring transmission of a carrier or pilot tone.

The previously mentioned U.S. Patent 3,887,768 describes a DSB—QC modulation system in which the signal points are mapped in the complex plane on concentric rings the signal points of which are rotated by 45° from those of the next adjacent ring. While the disclosed DSB—QC constellations combat the combined effects of noise and phase jitter as discussed in the reference, in fact, improvements in the state-of-the art carrier equipment has itself contributed substantially to the reduction of phase jitter on many communication channels so that signal constellations designed to provide the best compromise performance between noise and phase jitter are no longer optimum in the sense of overall performance, wherein the "best" performance is defined as lowest overall bit error rate.

In order to attain higher data rates in a given bandwidth, higher signal-to-noise ratios in the communications media are required. As higher signals-to-noise ratios are required, constellations for more signal-to-noise efficient signals are necessary. In the presence of noise alone, signal constellations with points equally spaced on a square grid provide a near optimum performance. Moreover, such a pattern permits simple encoding at the transmitter and simple decoding or detection at the receiver. It is known that for a given error rate and bandwidth a square grid constellation offers better signal/noise performance than a comparable concentric ring type constellation. In fact, for example, a well known ring type constellation employing 16 points for 9600 bit transmission in a Nyquist bandwidth of 2400 Hz requires 1.3 dB greater signal/noise ratio for a given symbol error rate than a comparable square grid constellation. The well known concentric ring constellation discussed above is that proposed by CCITT Recommendation V29 (offered commercially by Paradyne Corporation of Largo Florida as its MP-96 Data Modem). The square grid constellation is employed by Bell System in their model 209 Data Set.

The sacrifices paid for the greater signal to noise ratio of the square grid pattern over the concentric ring pattern are that:

1. The number of usable points must equal $2^M$ where M is an integer and thus $2^M$ can only equal 2, 4, 8, 16, etc. As a result a grid such as 3×3 could not be used.

2. As the number of points increases the distance from the origin of the furthest point relative to the root mean square distance increases rapidly. Since the distance from the origin is proportional to the voltage necessary to generate the point, the peak to average voltage ratio becomes large and may lead to clipping in most communication media.

In view of the above, it is the principal object of the present invention to provide improved DSB—QC signal structures developed to provide near optimum performance in the presence of noise.

A further object is to provide such signal structures which allow simple encoding and decoding or detection.

A still further object is to provide such signal structures wherein the points in each of the four quadrants may be differentially phase encoded such that an absolute carrier reference is not necessary.

Other objects and advantages will be self-evident from the description of the preferred embodiments of the invention.

### Summary of the invention

The above and other beneficial objects and advantages are attained in accordance with the present invention by providing a method of transmitting information in M-bit groups by modulating carriers in quadrature using double sideband modulation, at any time each carrier being amplitude modulated to a selected one of a plurality of spaced discrete values, so that the modulated carriers define an array of points respectively representing different M-bit groups of information, M being an integer greater than 2, characterised in that the array of points is generated by forming a square array of N×N substantially equally spaced points having 90° symmetry about the origin with any point at the origin omitted, where N is an integer such that $N^2$ is greater than or equal to $2^M$, and where the square array with any point at the origin omitted includes more points than $2^M$ those in excess of $2^M$ furthest from the origin are omitted, and if after such omission there remains a single point in each quadrant further from the origin than any other point that point is placed so as to be spaced from the other points by at least the minimum separation between the other points and as close as possible to the origin, the selection of points for omission and the placing of any such point being made to reduce as far as possible the peak to average voltage ratio of the modulated carriers.

According to another aspect of the present invention there is provided a double sideband quadrature carrier modulation system comprising input means for receiving information representable as M-bit groups in succession, means responsive to each received M-bit group to produce two carriers double sideband amplitude modulated in quadrature to selected ones of a plurality of spaced discrete values, the values being such that the modulated carriers define an array of points respectively representing different M-bit groups of information, M being an integer greater than 2, characterised in that the array of points is generated by forming a square array of N×N substantially equally spaced points having 90° symmetry about the origin with any point at the origin omitted, where N is an integer such that $N^2$ is greater than or equal to $2^M$, and where the square array with any point at the origin omitted includes more points than $2^M$ those in excess of $2^M$ furthest from the origin are omitted, and if after such omission there remains a single point in each quadrant further from the origin than any other point that point is placed so as to be spaced from the other points by at least the minimum separation between the other points and as close as possible to the origin, the selection of points for omission and the placing of any such single point being made to reduce as far possible the peak to average voltage ratio of the modulated carriers.

Brief description of the drawings
    In the accompanying drawings:
    Figure 1 depicts a 3×3 constellation which contains eight possible points;
    Figure 2 depicts a 6×6 constellation which contains thirty-two possible points;
    Figure 3 depicts a possible encoding scheme for a 6×6 constellation;
    Figure 4 illustrates differential gray coding of the quadrants to eliminate the need for a carrier phase reference;
    Figure 5 depicts prior art related to a 8×8 constellation;
    Figure 6 depicts a modified 8×8 constellation;
    Figure 7 depicts another modified 8×8 constellation; and
    Figure 8 is a block diagram of one example of a system embodying the present invention;

Description of preferred embodiments
    Data rates heretofore employed for digital signalling over telephone channels may be expressed as 2400×$2^M$ where M is an integer. The standard rates attained therefore are 2400, 4800, and 9600 bits per second where M=0, 1, and 2 respectively. To conveniently attain these rates, modems which are switchable and therefore provide all rates usually signal at a symbol rate of 2400 symbols per second. Transmission at 2400 bps requires one bit to be encoded into one of two possible phases each symbol time. 4800 bps requires two bits to be encoded into one of four possible phases each symbol time and 9600 bps requires four bits to be encoded into sixteen points. The means for encoding and a method for implementing the encoding scheme are set forth in the previously mentioned U.S. Patent 3,887,768.

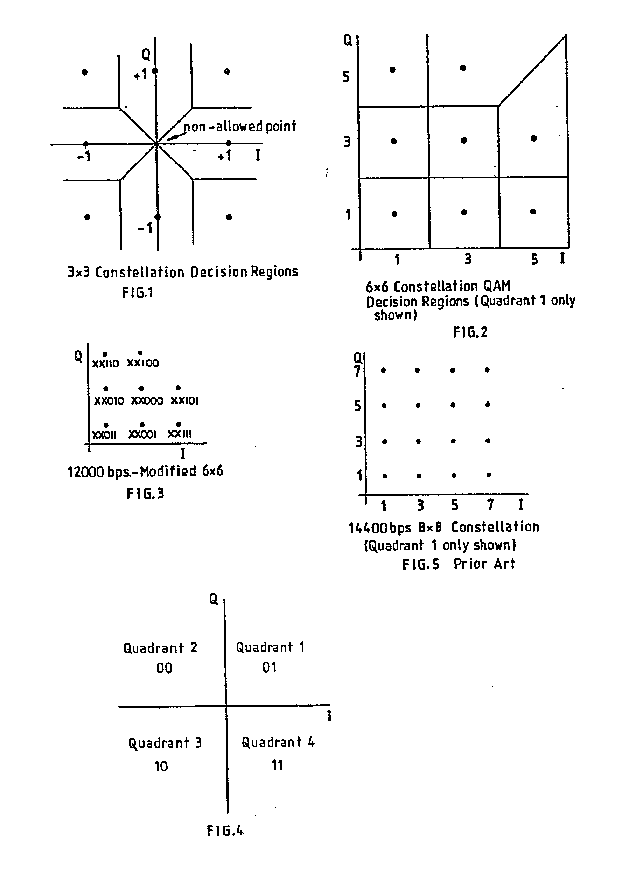

    In a modem providing 2400, 4800 and 9600 bps operation it is desirable to provide also the rate of 7200 bps particularly since certain terminals are designed to operate at 7200 bps. To obtain this rate, it is necessary to obtain 3 bits per symbol or eight possible points. In accordance with the present invention, the signal constellation of Figure 1 provides this function as it allows three bits to be encoded into eight possible points. To obtain eight points on a square constellation, the dimensions of the square must be at least 3×3 since anything less would not provide sufficient points. The set of points may be represented by the co-ordinates +1, 0, −1 on the in-phase and quadrature axes. In accordance with the present invention the zero point is eliminated thereby leaving the required eight points. Not allowing the zero point to occur has advantage of permitting continuous tracking of the carrier phase since reception of the 0,0 point does not convey carrier phase information. Since the 0,0 point has been eliminated no determination need be made as to whether or not the furthest point from 0,0 in each quadrant is further than all other points and no point relocating need be done.

    The eight possible phases shown in Figure 1 are differentially encoded such that an absolute carrier phase is not required.

    Figure 2 illustrates one quadrant of a 6×6 constellation which can be used to yield a data rate of 12,000 bits per second for a symbol rate of 2400 symbols per second. In this case each symbol is represented by 5 bits hence $2^M=2^5=32$ and thus N×N must exceed 32. The lowest value for N is hence 6. Accordingly, 6 levels are allowed on each axis, but only 32 possibilities are permitted since for each symbol time five bits are encoded into a point. There are thus four non-allowed points which would occur at co-ordinates (−5, −5) (−5, 5), (5, −5) and (5, 5). Omitting these points minimizes the peak to average power level of the transmitted signal.

    Figure 3 illustrates one candidate coding scheme for the constellation of Figure 2 wherein the first two bits denoted by XX are differentially encoded between quadrants such that a carrier phase reference is not necessary. Differential coding of the first two bits between quadrants of the scheme of Figure 3 to eliminate the requirement for a carrier phase reference is shown in Figure 4.

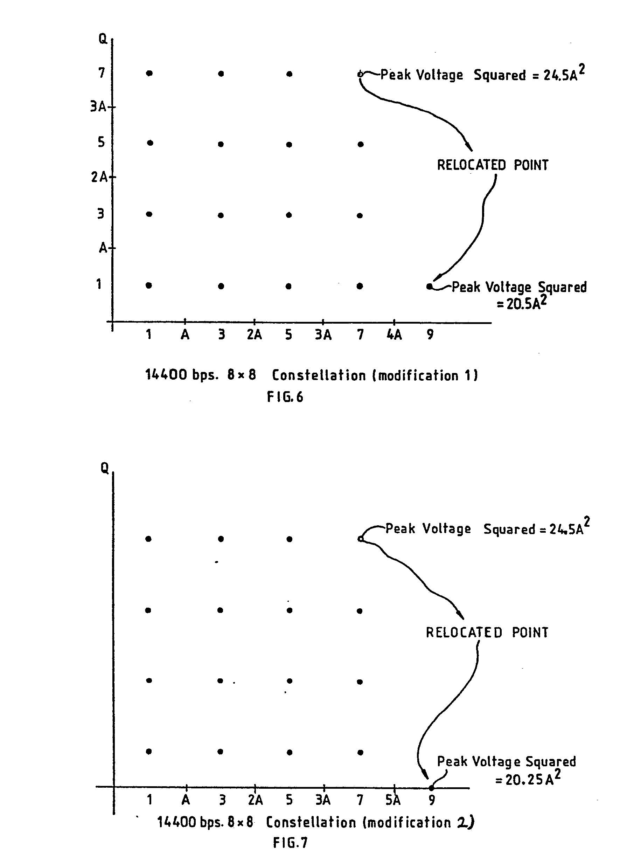

    To achieve a data rate of 14,400 bps at a symbol rate of 2400 symbols per second requires 6 bits to be encoded into one of sixty-four possible points each symbol time. This may be accomplished in accordance with the scheme of Figure 5 which illustrates the prior art wherein all sixty-four points are spaced equally with respect to the in-phase and quadrature axes. However, the points located at co-ordinates (−7, −7), (−7, 7), (7, −7) and (7, 7) cause a relatively high peak to average power ratio because of their maximal distance from point 0, 0 (i.e., at the extreme points) the power requirement is $24.5A^2$. Two modifications to the constellation of Figure 5 in accordance with the present invention which yield a lower peak to average power ratio yet which preserve equal spacing on each axis and which provide symmetry in all four quadrants are illustrated in Figures 6 and 7. This is accomplished in each case by relocating the point in each quadrant further spaced from the origin than any other point (i.e., 7, 7; −7, 7; 7, −7 and −7, −7) to positions closer than the origin.

In Figure 6, the point at (7, 7) is relocated to (9, 1). Similarly, the point at (−7, 7) is relocated to (−1, 9). (−7, −7) is relocated to (−9, −1) and (7, −7) is relocated to (1, −9).

In Figure 7, the point at (7, 7) is relocated to (9, 0). Similarly, the point at (−7, 7) is relocated to (0, 9). (−7, −7) is relocated to (−9, 0) and (7, −7) is relocated to (0, −9).

In each case the danger of the signal being clipped is significantly reduced since the peak power requirement is reduced by 0.8 dB as indicated in Figures 6 and 7.

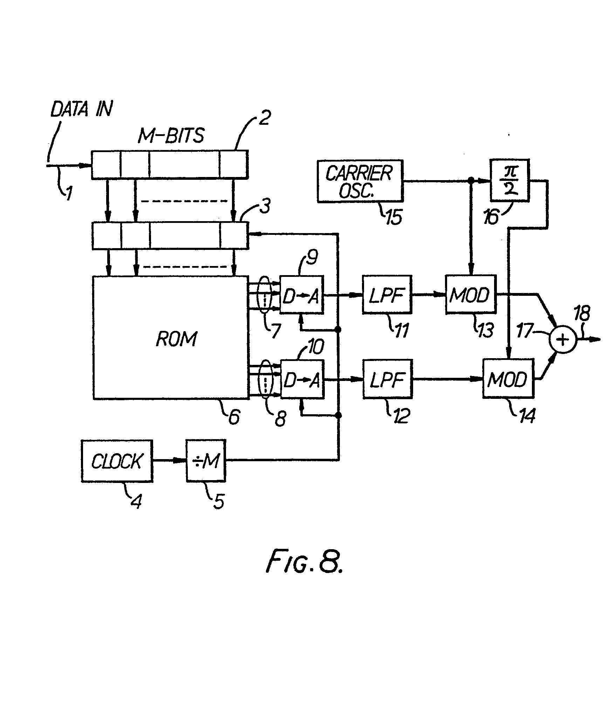

Figure 8 shows in block diagrammatic form one example of apparatus for encoding serial binary data in double sideband quadrature carrier modulation form according to the invention. The input data is received via a line 1 by an M-bit shifting register 2. Every M clock cycles the M-bit number stored in the register 2 is transferred to a buffer store 3 under control of signals derived from a clock oscillator 4 by a divide-by-M circuit 5. The M-bit number in the store 3 is used as an address input for a read-only-memory 6 which stores the co-ordinates of the point of the constellation corresponding to the number stored in the store 3 and produces these on output conductors 7 and 8 respectively. The data output from the ROM 6 on the conductors 7 and 8 is converted to analogue form by converters 9 and 10 respectively at instants determined by the outputs of the divide-by-M circuit 5. After passing through low pass filters 11 and 12 respectively the analogue signals from the converters 9 and 10 are applied to respective modulators 13 and 14 to which in phase and quadrature carrier oscillations are applied directly from a carrier oscillator 15 and via a quadrature wave phase shifting circuit 16. The outputs of the modulators 13 and 14 are combined in a circuit 17 to produce the required output signal on a conductor 18.

The operation of the circuit of Figure 8 is quite straightforward and can readily be understood from consideration of the foregoing description and the disclosure in the previously mentioned United States Patent Specification No. 3 887 768.

The encoded signal can be decoded by a circuit similar to that shown in Figure 8 to reproduce the transmitted data in suitable form. It will be appreciated that the system described is only one example of possible systems embodying the present invention and many modifications could be made to the described circuit which will be apparent to one skilled in the art.

## Claims

1. A method of transmitting information in M-bit groups by modulating carriers in quadrature using double sideband modulation, at any time each carrier being amplitude modulated to a selected one of a plurality of spaced discrete values, so that the modulated carriers define an array of points respectively representing different M-bit groups of information, M being an integer greater than 2, characterised in that

the array of points is generated by forming a square array of N×N substantially equally spaced points having 90° symmetry about the origin with any point at the origin omitted, where N is an integer such that $N^2$ is greater than or equal to $2^M$, and

where the square array with any point at the origin omitted includes more points than $2^M$ those in excess of $2^M$ furthest from the origin are omitted, and if after such omission there remains a single point in each quadrant further from the origin than any other point that point is placed so as to be spaced from the other points by at least the minimum separation between the other points and as close as possible to the origin,

the selection of points for omission and the placing of any such single point being made to reduce as far as possible the peak to average voltage ratio of the modulated carriers.

2. A method in accordance with claim 1 wherein M=3, N=3, the points are arranged at −1, 0, and +1 along each axis and the origin point (0, 0) is omitted.

3. A method in accordance with claim 1 wherein M=5, N=6, the points are arranged at −5, −3, −1, 1, 3 and 5 along each axis, and the points at 5, 5; −5, 5; 5, −5; and −5, −5 are omitted.

4. A method in accordance with claim 1 wherein M=6, N=8, the points are arranged at −7, −5, −3, −1, 1, 3, 5 and 7 along each axis, and the points located at (7, 7), (−7, 7), (7, −7) and (−7, −7) are relocated to (9, 1), (−1, 9), (1, −9) and (−9, −1) respectively.

5. A method in accordance with claim 1 wherein M=6, N=8, the points are arranged at −7, −5, −3, −1, 1, 3, 5 and 7 along each axis and the points located at (7, 7), (−7, 7), (7, −7) and (−7, −7) are relocated to (9, 0) (0, 9), (0, −9) and (−9, 0) respectively.

6. A double sideband quadrature carrier modulation system comprising

input means (1, 2, 3, Figure 8) for receiving information representable as M-bit groups in succession,

means (6—17) responsive to each received M-bit group to produce two carriers double sideband amplitude modulated in quadrature to selected ones of a plurality of spaced discrete values, the values being such that the modulated carriers define an array of points respectively representing different M-bit groups of information, M being an integer greater than 2, characterised in that

the array of points is generated by forming a square array of NxN substantially equally spaced points having 90° symmetry about the origin with any point at the origin omitted, where N is an integer such that $N^2$ is greater than or equal to $2^M$, and

where the square array with any point at the origin omitted includes more points than $2^M$ those in excess of $2^M$ furthest from the origin are omitted, and if after such omission there remains a single point in each quadrant further from the origin than any other point that point is placed so as to be spaced from the other points by at least the minimum separation between the other points and as close as possible to the origin,

the selection of points for omission and the placing of any such single point being made to reduce as far as possible the peak to average voltage ratio of the modulated carriers.

7. A system according to claim 6 wherein M=3, N=3, the points are arranged at −1, 0, and +1 along each axis and the origin point (0, 0) is omitted.

8. A system according to claim 6 wherein M=5, N=6, the points are arranged at −5, −3, −1, 1, 3 and 5 along each axis, and the points at 5, 5; −5, 5; 5, −5; and −5, −5 are omitted.

9. A system according to claim 6 wherein M=6, N=8, the points are arranged at −7, −5, −3, −1, 1, 3, 5 and 7 along each axis, and the points located at (7, 7), (−7, 7), (7, −7) and (−7, −7) are relocated to (9, 1), (−1, 9), (1, −9) and (−9, −1) respectively.

10. A system according to claim 6 wherein M=6, N=8, the points are arranged at −7, −5, −3, −1, 1, 3, 5 and 7 along each axis and the points located at (7, 7), (−7, 7), (7, −7) and (−7, −7) are relocated to (9, 0), (0, 9), (0, −9) and (−9, 0) respectively.

**Patentansprüche**

1. Verfahren zur Übertragung von Information in M Bit-Gruppen durch Quadraturmodulation von Trägern unter Verwendung von Doppelseitenbandmodulation, wobei jeder Träger jedes Mal auf einen ausgewählten einer Mehrzahl von im Abstand liegenden diskreten Werten amplitudenmoduliert wird, so daß die modulierten Träger ein Feld von Punkten definieren, die jeweils unterschiedliche M Bit-Gruppen von Information repräsentieren und wobei M eine ganze Zahl größer als 2 ist, dadurch gekennzeichnet, daß das Feld von Punkten erzeugt wird durch Bildung eines Quadratfeldes von NxN im wesentlichen gleichen Abstand aufweisenden Punkten mit 90° Symmetrie bezüglich des Ursprungs, wobei jeder Punkt im Ursprung weggelassen wird, wobei N eine ganze Zahl ist derart, daß $N^2$ größer oder gleich $2^M$ ist und wobei das Quadratfeld unter Weglassung jedes Punktes im Ursprung mehr als $2^M$ Punkte aufweist, wobei jedoch jene, die $2^M$ übersteigen und am weitesten vom Ursprung abliegen, weggelassen werden und falls nach solcher Weglassung ein einzelner Punkt in jedem Quadranten verbleibt, der weiter abliegt vom Ursprung als irgendein anderer Punkt, dieser Punkt so plaziert wird, daß er von den anderen Punkten mindestens den Minimalabstand aufweist zwischen den anderen Punkten und so dicht wie möglich am Ursprung liegt, und wobei die Auswahl der Punkte für die Weglassung und Plazierung irgendeines solchen einzelnen Punktes derart erfolgt, daß weitestgehend das Spitze/Mittelwert-Spannungsverhältnis der modulierten Träger reduziert wird.

2. Verfahren nach Anspruch 1 mit M=3, N=3, bei dem die Punkte bei −1, 0 und +1 längs jeder Achse angeordnet sind und der Ursprungspunkt (0, 0) weggelassen ist.

3. Verfahren nach Anspruch 1 mit M=5, N=6, bei dem die Punkte bei −5, −3, −1, 1, 3 und 5 längs jeder Achse angeordnet sind und die Punkte bei 5, 5; −5, 5; 5, −5; und −5, −5 weggelassen sind.

4. Verfahren nach Anspruch 1 mit M=6, N=8, wobei die Punkte bei −7, −5, −3, −1, 1, 3, 5 und 7 längs jeder Achse angeordnet sind und die Punkte bei (7, 7), (−7, 7), (7, −7) bzw. (−7, −7) relokalisiert werden auf (9, 1), (−1, 9), (1, −9) bzw. (−9, −1).

5. Verfahren nach Anspruch 1 mit M=6, N=8, wobei die Punkte bei −7, −5, −3, −1, 1, 3, 5 und 7 längs jeder Achse angeordnet sind und die bei (7, 7), (−7, 7), (7, −7) bzw. (−7, −7) liegenden Punkte relokalisiert sind auf (9, 0), (0, 9), (0, −9) bzw. (−9, 0).

6. Ein Doppelseitenband-Quadraturträgermodulationssystem mit Eingangsmitteln (1, 2, 3 Fig. 8) für den Empfang von Information, die repräsentierbar ist als in Aufeinanderfolge vorliegenden M Bit-Gruppen, mit Mitteln (6—17) ansprechend ausgebildet auf jede empfangene M Bit-Gruppe zum Erzeugen von zwei Trägern, die doppelseitenwand-amplitudenquadraturmoduliert sind auf ausgewählte Werte einer Mehrzahl von im Abstand liegenden diskreten Werten, welche Werte so sind, daß die modulierten Träger ein Feld von Punkten definieren, die jeweils unterschiedliche M Bit-Gruppen von Information repräsentieren, wobei M eine ganze Zahl größer als 2 ist, dadurch gekennzeichnet, daß das Feld von Punkten erzeugt wird durch Bildung eines Quadratfeldes von NxN im wesentlichen gleichen Abstand aufweisenden Punkten mit 90° Symmetrie bezüglich des Ursprungs, wobei jeder Punkt im Urspruch weggelassen wird, wobei N eine ganze Zahl ist derart, daß $N^2$ größer oder gleich $2^M$ ist und wobei das Quadratfeld unter Weglassung jedes Punktes im Ursprung mehr als $2^M$ Punkte aufweist, wobei jedoch jene, die $2^M$ übersteigen und am weitesten vom Ursprung abliegen, weggelassen werden und falls nach solcher Weglassung ein einzelner Punkt in jedem Quadranten verbleibt, der weiter abliegt vom Ursprung als irgendein anderer Punkt, dieser Punkt so plaziert wird, daß er von den anderen Punkten mindestens den Minimalabstand aufweist zwischen den anderen Punkten und so dicht wie möglich am Ursprung liegt, und wobei die Auswahl der Punkte für die Weglassung und Plazierung irgendeines solchen einzelnen Punktes derart erfolgt, daß weitestgehend das Spitze/Mittelwert-Spannungsverhältnis der modulierten Träger reduziert wird.

7. Ein System nach Anspruch 6, mit M=3, N=3, bei dem die Punkte bei −1, 0 und +1 längs jeder Achse angeordnet sind und der Ursprungspunkt (0, 0) weggelassen ist.

8. Ein System nach Anspruch 6 mit M=5, N=6, bei dem die Punkte bei −5, −3, −1, 1, 3 und 5 längs jeder Achse angeordnet sind und die Punkte bei 5, 5; −5, 5; 5, −5; und −5, −5 weggelassen sind.

9. Ein System nach Anspruch 6 mit M=6, N=8, wobei die Punkte bei −7, −5, −3, −1, 1, 3, 5 und 7 längs jeder Achse angeordnet sind und die Punkte bei (7, 7), (−7, 7), (7, −7) bzw. (−7, −7) relokalisiert werden auf (9, 1), (−1, 9), (1, −9) bzw. (−9, −1).

10. Ein System nach Anspruch 6 mit M=6, N=8, wobei die Punkte bei −7, −5, −3, −1, 1, 3, 5 und 7 längs jeder Achse angeordnet sind und die bei (7, 7), (−7, 7), (7, −7) bzw. (−7, −7) liegenden Punkte relokalisiert sind auf (9, 0), (0, 9), (0, −9) bzw. (−9, 0).

**Revendications**

1. Procédé de transmission d'informations en groupes de M bits par modulation de porteuses en quadrature en utilisant une modulation à double bande latérale, chaque porteuse étant à un moment quelconque modulée jusqu'à une valeur sélectionnée parmi une pluralité de valeurs distinctes espacées, de manière que les porteuses modulées définissent un réseau de points représentant respectivement différents groupes de M bits d'information, M étant un nombre entier supérieur à 2, caractérisé en ce que:

— le réseau de points est engendré par formation d'un réseau carré de NxN points sensiblement également espacés et présentant une symétrie de 90° par rapport à l'origine où il n'est prévu aucun point, N étant un nombre entier tel que $N^2$ soit supérieur ou égal à $2^M$, et

— lorsque le réseau carré, dans lequel un point quelconque placé à l'origine est omis, comprend plus de points que $2^M$, ceux supérieurs à $2^M$ et les plus éloignés de l'origine sont omis, et

— si après une telle omission, il subsiste dans chaque quadrant un seul point plus éloigné de l'origine qu'un autre point, ce point est placé de manière à être espacé des autres points d'au moins l'écartement minimal entre les autres points et à être aussi rapproché que possible de l'origine, la sélection de points à omettre et le placement d'un tel point unique étant faits pour réduire autant qu'il est possible le rapport entre la tension de crête et la tension moyenne des porteuses modulées.

2. Procédé selon la revendication 1, suivant lequel M=3, N=3, les points sont disposés en −1, 0 et +1 le long de chaque axe et le point origine (0, 0) est omis.

3. Procédé selon la revendication 1, suivant lequel M=5, N=6, les points sont disposés en −5, −3, −1, 1, 3 et 5 le long de chaque axe, et les points en 5, 5; −5, 5; 5, −5; et −5, −5 sont omis.

4. Procédé selon la revendication 1, suivant lequel M=6, N=8, les points sont disposés en −7, −5, −3, −1, 1, 3, 5 et 7 le long de chaque axe, et les points placés en (7, 7), (−7, 7), (7, −7) et (−7, −7) sont repositionnés respectivement en (9, 1), (−1, 9), (1, −9) et (−9, −1).

5. Procédé selon la revendication 1, suivant lequel M=6, N=8, les points sont disposés en −7, −5, −3, −1, 1, 3, 5 et 7 le long de chaque axe, et les points placés en (7, 7), (−7, 7), (7, −7) et (−7, −7) sont repositionnés respectivement en (9, 0), (0, 9), (0, −9) et (−9, 0).

6. Système de modulation de porteuse en quadrature à double bande latérale comprenant:

— des moyens d'entrée (1, 2, 3, Figure 8) pour recevoir une information pouvant être représentée sous la forme de groupes de M bits successifs;

— des moyens (6, 17) répondant à chaque groupe de M bits reçu pour produire deux porteuses modulées en amplitude et en quadrature avec double bande latérale sur des valeurs sélectionnées parmi une pluralité de valeurs distinctes espacées, les valeurs étant telles que les porteuses modulées définissent un réseau de points représentant respectivement différents groupes de M bits d'information, M étant un nombre entier supérieur à 2, caractérisé en ce que:

— le réseau de points est engendré par formation d'un réseau carré de N×N points sensiblement espacés également et présentant une symétrie de 90° par rapport à l'origine, un point quelconque se trouvant à l'origine étant omis et N étant un nombre entier tel que N² soit supérieur ou égal à $2^M$, et,

— lorsque le réseau carré, dans lequel un point quelconque placé à l'origine est omis, comprend plus de points que $2^M$, ceux supérieurs à $2^M$ et les plus éloignés de l'origine sont omis, et si après une telle omission, il subsiste dans chaque quadrant un seul point plus éloigné de l'origine qu'un autre point, ce point est placé de manière à être espacé des autres points d'au moins l'écartement minimal entre les autres points et à être aussi rapproché que possible de l'origine,

— la sélection de points à omettre et le placement d'un tel point unique étant faits pour réduire autant qu'il est possible le rapport entre la tension de crête et la tension moyenne des porteuses modulées.

7. Système selon la revendication 6, dans lequel M=3, N=3, les points sont disposés en —1, 0 et +1 le long de chaque axe et le point origine (0, 0) est omis.

8. Système selon la revendication 6, dans lequel M=5, N=6, les points sont disposés en —5, —3, —1, 1, 3 et 5 le long de chaque axe et les points en 5, 5; —5, 5; 5, —5; et —5, —5 sont omis.

9. Système selon la revendication 6, dans lequel M=6, N=8, les points sont disposés en —7, —5, —3, —1, 1, 3, 5 et 7 le long de chaque axe et les points positionnés en (7, 7), (—7, 7), (7, —7) et (—7, —7) sont repositionnés respectivement en (9, 1), (—1, 9), (1, —9) et (—9, —1).

10. Système selon la revendication 6, dans lequel M=6, N=8, les points sont disposés en —7, —5, —3, —1, 1, 3, 5 et 7 le long de chaque axe et les points positionnés en (7, 7), (—7, 7), (7, —7) et (—7, —7) sont repositionnés respectivement en (9, 0), (0, 9), (0, —9) et (—9, 0).

3x3 Constellation Decision Regions
FIG.1

6x6 Constellation QAM
Decision Regions (Quadrant 1 only
shown)

FIG.2

xx110 xx100
xx010 xx000 xx101
xx011 xx001 xx111

12000 bps.-Modified 6x6
FIG.3

14400 bps 8x8 Constellation
(Quadrant 1 only shown)
FIG.5  Prior Art

Quadrant 2
00

Quadrant 1
01

Quadrant 3
10

Quadrant 4
11

FIG.4

1

14400 bps. 8 × 8  Constellation (modification 1)
FIG. 6

14400 bps. 8 × 8  Constellation (modification 2)
FIG. 7

Fig.8.